# EUROPEAN PATENT APPLICATION

(11) **EP 1 894 552 A2**
(43) Date of publication of application: **05.03.2008**
(21) Application number: 07460012.3
(22) Date of filing: 11.06.2007
(51) Int. Cl.: A61G 3/06, A61G 5/00, B62K 5/02

(54) **Invalid three-wheeler**

(30) Priority: 12.06.2006 PL 37992306
(71) Applicant: Przedsiebiorstwo Produkcyjno - Handlowe G.M. Michal Gryt, 41-409 Myslowice (PL)
(72) Inventor: Przedsiebiorstwo Produkcyjno - Handlowe G.M. Michal Gryt, 41-409 Myslowice (PL)
(74) Representative: Bogacki, Grzegorz

(57) **Abstract**

The Invalid three-wheeler is constructed on the basis of a motorbike, characterized in that has a rectangular floor /4/ to which on both sides rear parts of a motorbike /2/ and /3/ are attached, and at the front the front part of a motorbike /1/ is attached, however at the back the floor has a split flap /5/, wherein at the front of the motorbike /1/ there are two connecting elements /7/ appropriately adapted to be joined with connecting elements /6/ of the invalid wheelchair /8/.

## Description

The subject of the invention is a three-wheeled invalid chair which considerably increases independence of an invalid with disabled lower limbs, and creates possibility of taking longer trips from an invalid's place of residence e.g. trips to a workplace, doctor, shops or going fishing, going to different occasional meetings etc. An invalid chair is an adjusted element of a three-wheeled carriage.

Known are different types of invalid wheelchairs, particularly for persons with disabled lower limbs. They are designed for moving around an invalid's place of residence. They are equipped with various facilities, electric drive; they can be fitted for moving up and down a light of stairs. There are also invalid wheelchairs with folding chassis like the one described in the Polish invention no 190248. Due to its construction the wheelchair particularly increases ability to use a motor-car by an invalid with disabled lower limbs.

The object of the present invention is to work out a driving construction which would increase an invalid's independence in long distance trips without necessity to leave the chair.

The invalid three-wheeler is constructed on the basis of a motorbike, and according to the invention, characterized in that has a rectangular floor adapted for placing on it an invalid chair. On both sides of the floor there are fitted rear parts of a motorbike, while at the front of the floor the front part of a motorbike is fitted. At the rear there is a split flap. At the front of the motorbike the three-wheeler in accordance with the invention, has connecting elements adjusted to the connecting elements of the invalid wheelchair.

The main advantage of the three-wheeled invalid chair in accordance with the invention, is the increase of an invalid's communication independence without the necessity of possessing additional authorization (for driving a vehicle fitted with motorbike engine driving license is not required).

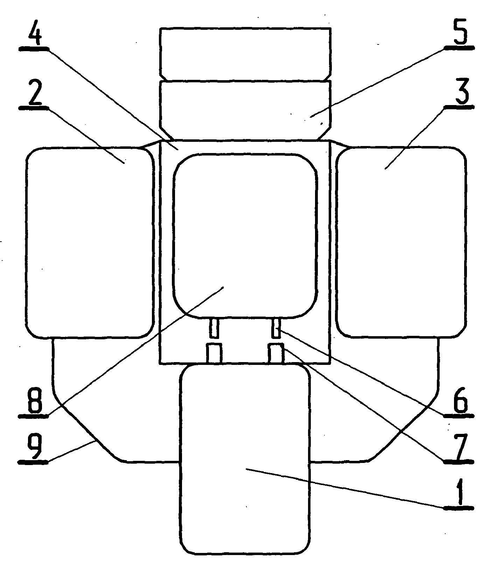

Solution in accordance with the invention has been presented in the example of execution in the attached drawing in which the invalid three-wheeler is presented in the form of a block diagram - view from the top.

The invalid three-wheeler has a rectangular floor 4 on which an invalid chair 8 is placed and to which on both sides rear parts of a motorbike 2 and 3 are attached, and at the floor's front the front part of a motorbike 1 is attached. At the back the floor 4 has a split flap 5. The three-wheeler's parts 1, 2 and 3 are real halves of an ordinary motorbike after appropriate alterations. In the rear part of the motorbike 2 there is a motorbike combustion engine and its gearbox (this part of the three-wheeler according to the invention ensures an appropriate drive necessary to move forward). In the rear of the motorbike 3 instead of the motorbike combustion engine and its gearbox there is an electric motor with a suitable transmission and accumulator (this part of the three-wheeler according to the invention ensures an appropriate drive necessary to maneuvering and reversing).

Split flap 5 is pilot-controlled (closed and opened). The flap ensures safe entrance and exit of the invalid wheelchair 8. Being applied the split flap 5 is the rear side of the invalid three-wheeler.

At the front of the motorbike 1 there are two connecting elements 7 appropriately adapted to be joined quickly with two connecting elements 6 of the invalid wheelchair 8. These elements make a system of permanent connection of the invalid wheelchair 8 with the three-wheeler according to the invention, working in all planes. Stability of the invalid three-wheeler is ensured by the frame 9 connecting its separate units.
A disabled person when sitting in the invalid wheelchair 8 drives the three-wheeler according to the invention using a driving wheel and other appropriately adapted elements placed at the front part of the motorbike 1.

## Claims

1. The invalid three-wheeter is constructed on the basis of a motorbike, **characterized in that** has a rectangular floor /4/ to which on both sides rear parts of a motorbike /2/ and /3/ are attached, and at the front the front part of a motorbike /1/ is attached, however at the back the floor has a split flap /5/, wherein at the front of the motorbike /1/ there are two connecting elements /7/ appropriately adapted to be joined with connecting elements /6/ ot the Invalid wheelchair /8/.
